# EUROPEAN PATENT SPECIFICATION

(11) **EP 3 769 896 B1**
(45) Date of publication and mention of the grant of the patent: **23.07.2025**
(21) Application number: 19771372.0
(22) Date of filing: 15.03.2019
(51) Int. Cl.: B23K 20/12, B29C 65/06

(54) **FRICTION BONDING DEVICE AND METHOD OF OPERATING SAME**
REIBUNGSVERBINDUNGSVORRICHTUNG UND VERFAHREN ZU DEREN BETRIEB
DISPOSITIF DE LIAISON PAR FROTTEMENT ET SON PROCÉDÉ DE FONCTIONNEMENT

(30) Priority: 19.03.2018 JP 2018051288
(43) Date of publication of application: 27.01.2021
(73) Proprietor: Kawasaki Jukogyo Kabushiki Kaisha, Hyogo 650-8670 (JP)
(72) Inventor: MURAMATSU, Yoshitaka, Hyogo 650-8670 (JP); OHASHI, Ryoji, Hyogo 650-8670 (JP); TAKEOKA, Naoki, Hyogo 650-8670 (JP); FUKUDA, Takuya, Hyogo 650-8670 (JP)
(74) Representative: Müller-Boré & Partner Patentanwälte PartG mbB
(86) International application number: PCT/JP2019/010910
(87) International publication number: WO 2019/181800

(56) References cited:
- WO-A1-2018/003740
- JP-A- 2018 020 359

## Description

### TECHNICAL FIELD

The present invention relates to a friction welding apparatus and a method of operating the same (see JP2018-020359A, forming the basis for the preamble of the independent claims 1 and 7).

### BACKGROUND ART

A friction welding method in which a plurality of steel members are joined using frictional heat is known (e.g., see Patent Document 1). In the friction welding method disclosed in Patent Document 1, which forms the basis for the preamble of claims 1 and 7, two sheets of steel plates, forming an object, are joined by pressing a rotary tool against said object while rotating the rotary tool to raise the temperature of the pressed part (also called the "to-be-joined part") of the to-be-joined object at or above an A3 transformation point, then letting the to-be-joined part be cooled at or below an A1 transformation point, and drawing out the rotary tool from the to-be-joined part in the state at or below the A1 transformation point.

### [Reference Document of Conventional Art]

### [Patent Document]

[Patent Document 1] JP2008-073694A
[Patent Document 2] JP2018-020359A

### DESCRIPTION OF THE INVENTION

### [Problem to be Solved by the Invention]

However, the friction welding method disclosed in Patent Document 1 is a method of joining the two sheets of steel plates, but it does not take joining of different types of plate members into consideration, for example, joining between a plate material made of aluminum and a plate material made of steel, and therefore, there is still room for an improvement.

The present invention is made in view of solving the problem, and one purpose thereof is to provide a friction welding apparatus and a method of operating the same, capable of increasing a joining strength, when joining a plurality of members made of different materials by using frictional heat.

### [Summary of the Invention]

In order to solve the conventional problem described above, a friction welding apparatus according to claim 1 is a friction welding apparatus configured to join a to-be-joined object having a first member and a second member by softening with frictional heat a part of said to-be-joined object. The friction welding apparatus includes a tool formed cylindrically, and rotatable about an axis thereof and reciprocatable in a direction along the axis, a rotary driver configured to rotate the tool about the axis, a linear driver configured to reciprocate the tool along the axis, a temperature detector configured to detect a temperature of said part of the to-be-joined object, and a control device configured to determine whether the temperature of said part of the to-be-joined object is at or above an A1 transformation point of the second member based on the temperature detected by the temperature detector. The device is adapted to join a to-be joined object where the first member is made of a different type of material from the second member, the second member is made of steel, and the first member is disposed opposing to the tool between the second member and the tool, and the control device controls the linear driver and the rotary driver so that (A) the tool is rotated about the axis while a tip-end part of the tool is pressed against said part of the to-be-joined object to increase a temperature of said part of the to-be-joined object at or above the A1 transformation point, (B) while the temperature of said part of the to-be-joined object is maintained at or above the A1 transformation point, the tip-end part of the tool reaches a given first position set beforehand so that the softened second member sticks into the softened first member, the first position being a position that is set within a range larger than 25% and less than 100% when a surface of the second member which contacts the first member, is set as 0% and an opposite surface of the second member is set as 100%, and (C) the tool is drawn out from said part of the to-be-joined object, while the temperature of said part of the to-be-joined object is maintained at or above the A1 transformation point and the tool is rotated.

Accordingly, a joining strength can be increased even if the plurality of members made of different materials are joined using frictional heat.

Moreover, a method for operating a friction welding apparatus according to claim 7 is a method for operating said friction welding apparatus, to join a to-be-joined object having a first member and a second member by softening with frictional heat a part of the to-be-joined object.

The first member is made of a different type of material from the second member, the second member is made of steel, and the first member is disposed opposing to the tool between the second member and the tool.

The method includes controlling operation of the linear driver and the rotary drive with the control device so that (A) the tool is rotated about the axis while the tip-end part of the tool is pressed against said part of the to-be-joined object to increase a temperature of said part of the to-be-joined object at or above an A1 transformation point, (B) while the temperature of said part of the to-be-joined object is maintained at or above the A1 transformation point, the tip-end part of the tool reaches the first position set beforehand so that the softened second member sticks into the softened first member, the first position being a position that is set within a range larger than 25% and less than 100% when a surface of the second member which contacts the first member, is set as 0% and an opposite surface of the second member is set as 100%, and (C) the tool is drawn out from said part of the to-be-joined object, while the temperature of said part of the to-be-joined object is maintained at or above the A1 transformation point and the tool is rotated.

Accordingly, the joining strength can be increased even if the plurality of members made of different materials are joined using frictional heat.

The above-described purpose, other purposes, features, and advantages of the present invention will become clear from detailed description of preferred modes described below with reference to the accompanying drawings.

### [Effect of the Invention]

According to the friction welding apparatus and the method of operating the same of the present invention, the joining strength can be increased even if the plurality of members made of different materials are joined using frictional heat.

### BRIEF DESCRIPTION OF DRAWINGS

Fig. 1 is a schematic view illustrating an outline configuration of a friction welding apparatus according to Embodiment 1.
Fig. 2 is a flowchart illustrating one example of operation of the friction welding apparatus according to Embodiment 1.
Fig. 3 is a schematic view illustrating a substantial part of the friction welding apparatus according to Embodiment 1.
Fig. 4 is a schematic view illustrating a substantial part of one example of a friction welding apparatus in Modification 1.
Fig. 5 is a schematic view illustrating a substantial part of one example of a friction welding apparatus in Modification 2.
Fig. 6 is a schematic view illustrating an outline configuration of a friction welding apparatus according to Embodiment 2.
Fig. 7 is a flowchart illustrating one example of operation of the friction welding apparatus according to Embodiment 2.

### MODES FOR CARRYING OUT THE INVENTION

Hereinafter, desirable embodiments of the present invention are described with reference to the drawings. Note that, below, the same reference characters are assigned to the same or corresponding components throughout the drawings to omit redundant description. Moreover, throughout the drawings, components which are needed to describe the present invention are selectively illustrated, and illustration of other components may be omitted. Further, the present invention is not limited to the following embodiments.

### (Embodiment 1)

A friction welding apparatus according to Embodiment 1 is a friction welding apparatus in which a to-be-joined object having a first member and a second member is softened and joined by frictional heat. The apparatus includes a tool formed cylindrically, and rotatable about an axis thereof and reciprocatable in a direction along the axis, a rotary driver which rotates the tool about the axis, a linear driver which reciprocates the tool along the axis, and a control device. The first member is disposed opposing to the tool, and is made of a different type of material from the second member, and the second member is made of steel. The control device controls the linear driver and the rotary driver so that (A) the tool is rotated about the axis while a tip-end part of the tool is pressed against a to-be-joined part of the to-be-joined object to raise the temperature of the to-be-joined part at or above an A1 transformation point, (B) in a state where the temperature of the to-be-joined part is maintained at or above the A1 transformation point, the tip-end part of the tool reaches a given first position set beforehand so that the softened second member sticks into the softened first member, and (C) the tool is drawn out from the to-be-joined part while the temperature of the to-be-joined part is maintained at or above the A1 transformation point, and the tool is rotated.

Alternatively, in the friction welding apparatus according to Embodiment 1, the control device may control the linear driver and the rotary driver, during (A), so that the temperature of the to-be-joined part becomes at or above an A3 transformation point.

Alternatively, in the friction welding apparatus according to Embodiment 1, the control device may control the linear driver and the rotary driver, during (B), so that the temperature of the to-be-joined part is maintained at or above the A3 transformation point.

Alternatively, in the friction welding apparatus according to Embodiment 1, the control device may control the linear driver and the rotary driver, during (C), so that the temperature of the to-be-joined part is maintained at or above the A3 transformation point.

Preferably, in the friction welding apparatus according to Embodiment 1, the first member may be made of at least one material of aluminum, thermoplastic resin, and fiber-reinforced plastic.

The friction welding apparatus according to Embodiment 1 further includes a temperature detector which detects the temperature of the to-be-joined part, and the control device determines whether the temperature of the to-be-joined part is at or above the A1 transformation point based on the temperature detected by the temperature detector.

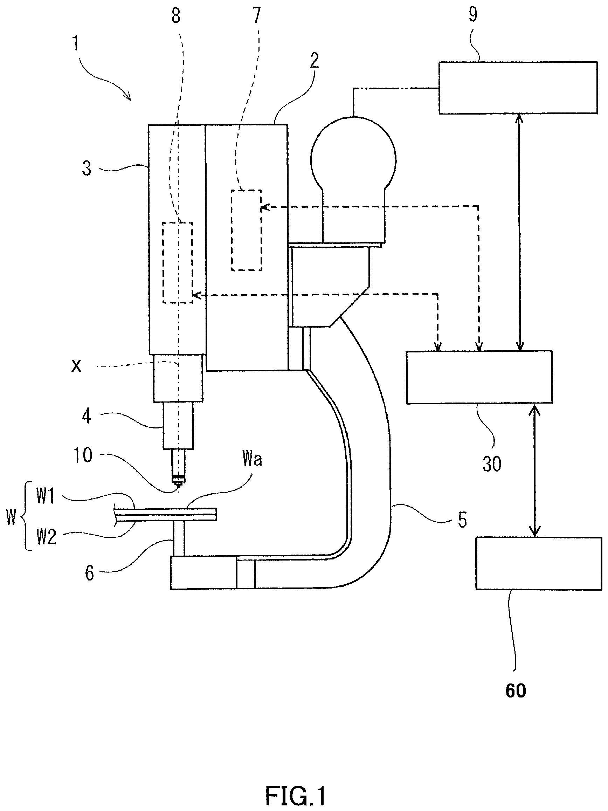

Hereinafter, one example of the friction welding apparatus according to Embodiment 1 is described in detail with reference to Figs. 1 to 3.

### [Configuration of Friction Welding Apparatus]

Fig. 1 is a schematic view illustrating an outline configuration of the friction welding apparatus according to Embodiment 1.

As illustrated in Fig. 1, a friction welding apparatus 1 according to Embodiment 1 includes a tool 10, a base body 2, a movable body 3, a tool holder 4, a linear driver 7, a rotary driver 8, a temperature detector 60, and a control device 30. The friction welding apparatus 1 softens a to-be-joined part Wa of a to-be-joined object W by frictional heat to join the to-be-joined object W.

The base body 2 is detachably attached to a tip-end part of a robotic arm 9. The movable body 3 is attached to the base body 2 movably in a direction of an axis X of the tool holder 4. The tool holder 4 is provided to a tip-end part of the movable body 3.

The tool holder 4 is rotatable about its axis X, and is movable in the direction of the axis X integrally with the movable body 3. The tool 10 is detachably provided to a tip-end part of the tool holder 4. Note that the tool 10 may have a known configuration in the field of friction stir welding.

Moreover, the linear driver 7 is disposed inside the base body 2. The linear driver 7 moves the movable body 3 (tool 10) linearly in the direction of the axis X. For example, the linear driver 7 may be an electric motor (servomotor), and a ball-screw mechanism or a linear-guide mechanism, or an air cylinder. Moreover, a position detector which detects the position of the tip-end part of the tool 10 may be disposed at the linear driver 7. For example, the position detector may be an encoder.

The rotary driver 8 is disposed inside the movable body 3. The rotary driver 8 rotates the tool holder 4 and the tool 10 about the axis X. For example, the rotary driver 8 may be an electric motor (servomotor).

Further, a curved frame 5 formed in a substantially C-shape (a substantially L-shape) is fixed to the base body 2. The curved frame 5 is formed so that its tip-end part opposes to the tool 10. Moreover, a support 6 is provided to the tip-end part of the curved frame 5. The support 6 supports the to-be-joined object W. That is, in Embodiment 1, the base body 2, the movable body 3, the tool holder 4, the curved frame 5, and the support 6 are comprised of a C-shaped gun (C-shaped frame).

In Embodiment 1, the to-be-joined object W is comprised of a plate-like first member W1 and a plate-like second member W2. The first member W1 may be made of at least one material among metallic material (e.g., aluminum), thermoplastic resin (e.g., polyamide), and fiber-reinforced plastic (e.g., carbon fiber reinforced plastic). The second member W2 is made of a different metallic material from that of the first member W1 and is made of steel.

Although in Embodiment 1 the to-be-joined object W is comprised of the plate-like first member W1 and the plate-like second member W2, the shape of the to-be-joined object W (the first member W1 and the second member W2) is arbitrary, without being limited to the above configuration, and, for example, may be a rectangular parallelepiped shape, or may be formed in an arc shape.

The temperature detector 60 detects the temperature of the to-be-joined part Wa of the to-be-joined object W and outputs the detected temperature to the control device 30. The temperature detector 60 may be any kind of detector, as long as it can detect the temperature of the to-be-joined part Wa of the to-be-joined object W, and, for example, it may be an infrared sensor, or may be a thermocouple disposed inside the support 6.

The control device 30 includes a processor, such as a microprocessor and a CPU, and a memory, such as a ROM and a RAM (none of them is illustrated). The memory stores information, such as a basic program and various fixed data. The processor controls various operations of the linear driver 7, the rotary driver 8, and the robotic arm 9 by reading and executing software, such as the basic program stored in the memory.

Note that the control device 30 may be comprised of a sole control device 30 which carries out a centralized control, or may be comprised of a plurality of control devices 30 which collaboratively carry out a distributed control. Moreover, the control device 30 may be comprised of a microcomputer, or may be comprised of a MPU, a PLC (Programmable Logic Controller), or a logic circuit, etc.

### [Operation of Friction Welding Apparatus (Method of Operating Friction Welding Apparatus)]

Next, a method of operating the friction welding apparatus 1 according to Embodiment 1 is described with reference to Figs. 1 to 3. Note that the following operation is executed by the processor of the control device 30 reading the program stored in the memory.

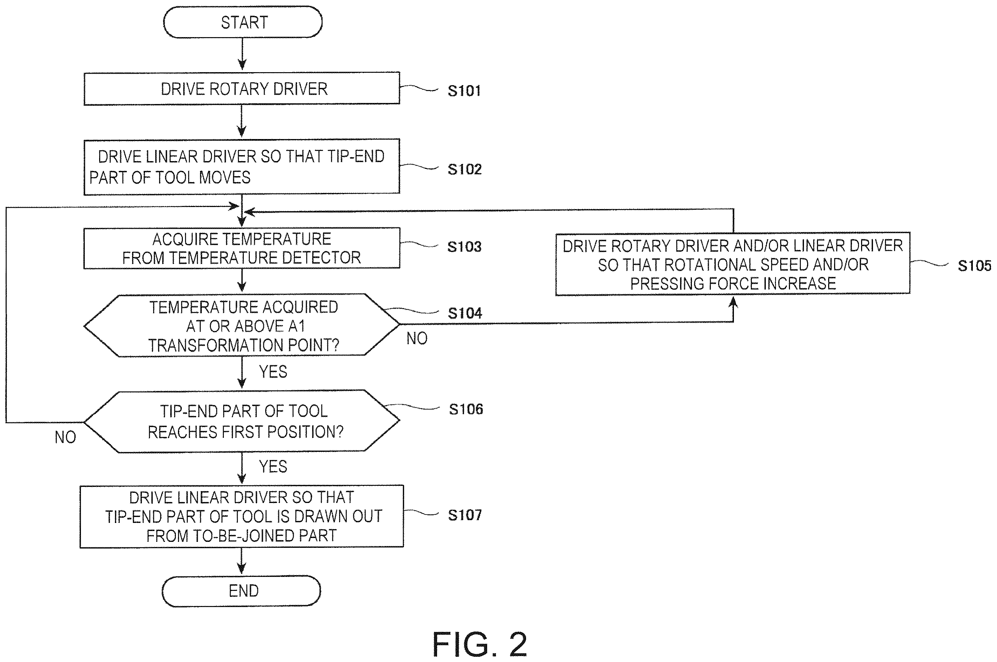

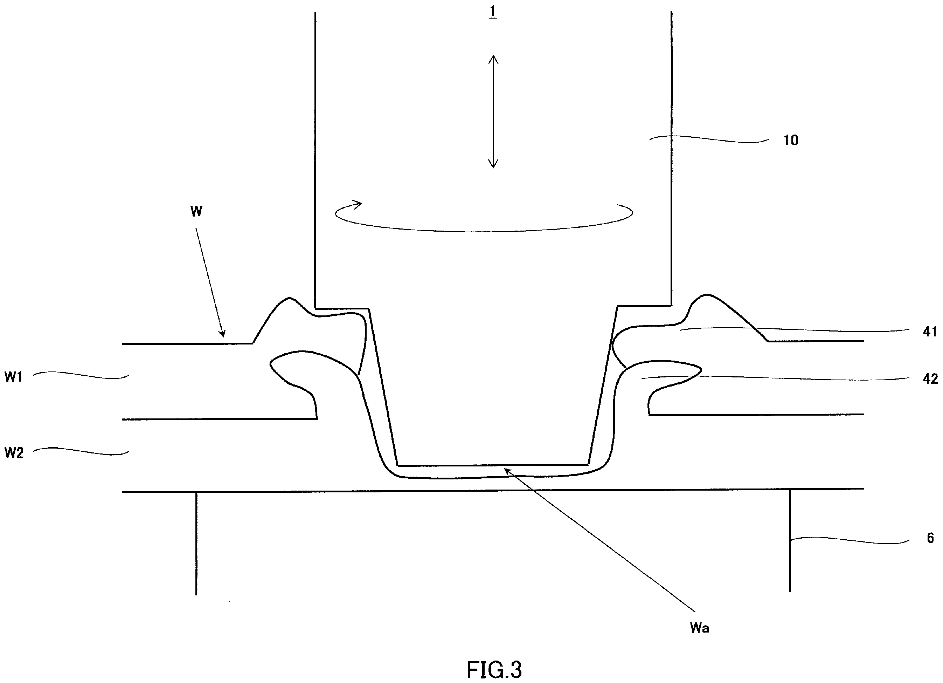

Fig. 2 is a flowchart illustrating one example of operation of the friction welding apparatus according to Embodiment 1. Fig. 3 is a schematic view illustrating a substantial part of the friction welding apparatus according to Embodiment 1, and illustrates a state where a friction welding is performed.

The operator first places the to-be-joined object W on an upper surface of the support 6. Next, the operator operates an input device (not illustrated) to input a joining execution of the to-be-joined object W into the control device 30.

Then, as illustrated in Fig. 2, the control device 30 drives the rotary driver 8 to rotate the tool holder 4 and the tool 10 at a given rotational speed (e.g., 500 to 3000rpm) (Step S101). Next, the control device 30 drives the linear driver 7 so that the tip-end part of the tool 10 moves, while rotating the tool holder 4 and the tool 10 (Step S102). At this time, the control device 30 controls the linear driver 7 so that the tool 10 is pressed against the to-be-joined object W with a given pressing force set beforehand (e.g., 4kN to 70kN). Note that the given rotational speed and the given pressing force may suitably be set beforehand by an experiment etc.

Therefore, the tool 10 contacts the to-be-joined object W, and frictional heat is generated by friction of the tip-end part of the tool 10 with the to-be-joined object W so that this part Wa of the to-be-joined object W is softened, and a plastic flow occurs.

At Step S103, the control device 30 acquires the temperature of the to-be-joined part Wa of the to-be-joined object W detected by the temperature detector 60. Then, the control device 30 determines whether the temperature acquired at Step S103 is at or above an A1 transformation point (Step S104).

If the temperature acquired at Step S103 is determined to be below the A1 transformation point (No at Step S104), the control device 30 controls the rotary driver 8 and/or the linear driver 7 so that the rotational speed and/or the pressing force of the tool 10 increase (Step S105), and repeats the processing at Steps S103 to S105 until the temperature of the to-be-joined part Wa of the to-be-joined object W becomes at or above the A1 transformation point.

On the other hand, if the temperature acquired at Step S103 is determined to be at or above the A1 transformation point (Yes at Step S104), the control device 30 executes the processing at Step S106.

At Step S106, the control device 30 determines whether the tip-end part of the tool 10 reaches a given first position set beforehand. Note that the positional information on the tip-end part of the tool 10 is detected by a position detector (not illustrated), and is outputted to the control device 30.

Here, the first position is set arbitrarily within a rage larger than 25% and less than 100%, when a surface of the second member W2 which contacts the first member W1 is set as 0%, and a surface of the second member W2 which contacts the support 6 is set as 100%. Note that, in terms of increasing the joining strength, the first position is preferably closer to the surface of the second member W2 which contacts the support 6, is 25% or more, may be 50% or more, may be 75% or more, may be 80% or more, may be 90% or more, or may be 95% or more.

If the control device 30 determines that the tip-end part of the tool 10 does not reach the first position (No at Step S106), it then executes the processing at Steps S103 to S106 until the tip-end part of the tool 10 reaches the first position.

As illustrated in Fig. 3, by pressing the tip-end part of the tool 10 into the to-be-joined part Wa, a second softened part 42 which is a softened part of the second member W2 enters (sticks) into a first softened part 41 which is a softened part of the first member W1. Note that, herein, the second softened part 42 which enters into the first softened part 41 is referred to as an "anchoring part."

Note that, although in Embodiment 1 the control device 30 determines whether the temperature acquired at Step S103 is at or above the A1 transformation point, it is not limited to this configuration. In terms of further increasing the joining strength of the to-be-joined object W, the control device 30 may determine whether the temperature acquired at Step S103 is above the A1 transformation point, or may determine whether the temperature acquired at Step S103 is at or above an A3 transformation point.

If the temperature of the to-be-joined part Wa becomes at or above the A1 transformation point, the second softened part 42 can be transformed into martensite when the tool 10 is drawn out. Therefore, the strength of the second softened part 42 which is the anchoring part can be increased, and therefore, the tensile strength of the to-be-joined object W can be increased.

Moreover, if the temperature of the to-be-joined part Wa becomes at or above the A3 transformation point, a ratio of the second softened part 42 transformed into martensite can be increased. Therefore, the strength of the second softened part 42 which is the anchoring part is further increased, and therefore, the tensile strength of the to-be-joined object W can be increased.

If the control device 30 determines that the tip-end part of the tool 10 reaches the first position (Yes at Step S106), it then executes the processing at Step S107.

At Step S107, the control device 30 drives the linear driver 7 so that the tip-end part of the tool 10 is drawn out from the to-be-joined part Wa while the tool holder 4 and the tool 10 are rotated. Then, when the tip-end part of the tool 10 is drawn out from the to-be-joined part Wa, the control device 30 suspends the rotary driver 8 so that the rotation of the tool holder 4 and the tool 10 are suspended, and then ends this program. Note that, when joining a plurality of to-be-joined parts Wa, the control device 30 may start a joining of the next to-be-joined part Wa, without suspending the rotation of the tool holder 4 and the tool 10.

With the friction welding apparatus 1 according to Embodiment 1 configured in this way, an anchoring effect is acquired in which the second softened part 42 of the second member W2 enters into the first softened part 41 of the first member W1 by performing the friction welding to the to-be-joined object W, and thus, a tensile-shear strength increases and a peel strength also relatively increases.

Moreover, with the friction welding apparatus 1 according to Embodiment 1, the control device 30 controls the linear driver 7 and the rotary driver 8 so that the temperature of the to-be-joined part Wa becomes at or above the A1 transformation point. Therefore, the second part 42 of the second member W2 becomes in a so-called "heat-treated (hardened) state," and the strength of the anchoring part (the second softened part 42) is increased. Thus, the tensile-shear strength further increases, and therefore, the anchoring effect is further increased.

### [Modification 1]

Next, a modification of the friction welding apparatus according to Embodiment 1 is described.

A friction welding apparatus in Modification 1 is the friction welding apparatus according to Embodiment 1, where the first member is comprised of a plurality of first sub members.

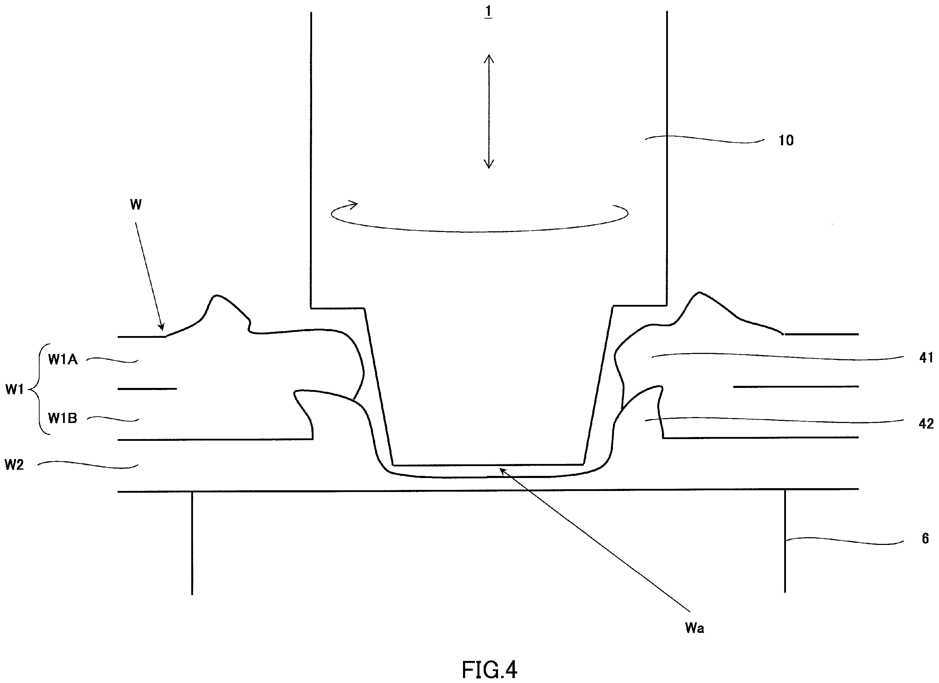

Below, the friction welding apparatus in Modification 1 is described with reference to Fig. 4.

Fig. 4 is a schematic view illustrating a substantial part of one example of the friction welding apparatus in Modification 1, and illustrates a state where the friction welding is performed.

As illustrated in Fig. 4, the friction welding apparatus 1 in Modification 1 has fundamentally the same configuration as the friction welding apparatus 1 according to Embodiment 1, but it differs in that the first member W1 is comprised of a plurality of first sub members W1A and W1B. In the plurality of first sub members, at least one of the first sub members may be made of a different type of material from the second member W2.

The second member W2 is made of steel, and for example the first sub members W1A and W1B may be made of aluminum. In this case, as illustrated in Fig. 4, the first sub members W1A and W1B are softened by the friction with the tip-end part of the tool 10, and the softened part is agitated and joined. Therefore, the second softened part 42 of the second member W2 enters (sticks) into the part (the first softened part 41) where the first sub members W1A and W1B are softened, agitated, and joined.

The friction welding apparatus 1 in Modification 1 configured in this way also has similar operation and effects to the friction welding apparatus 1 according to Embodiment 1.

### [Modification 2]

A friction welding apparatus in Modification 2 is the friction welding apparatus according to Embodiment 1 (including the friction welding apparatus in Modification 1), where the second member is comprised of a plurality of second sub members.

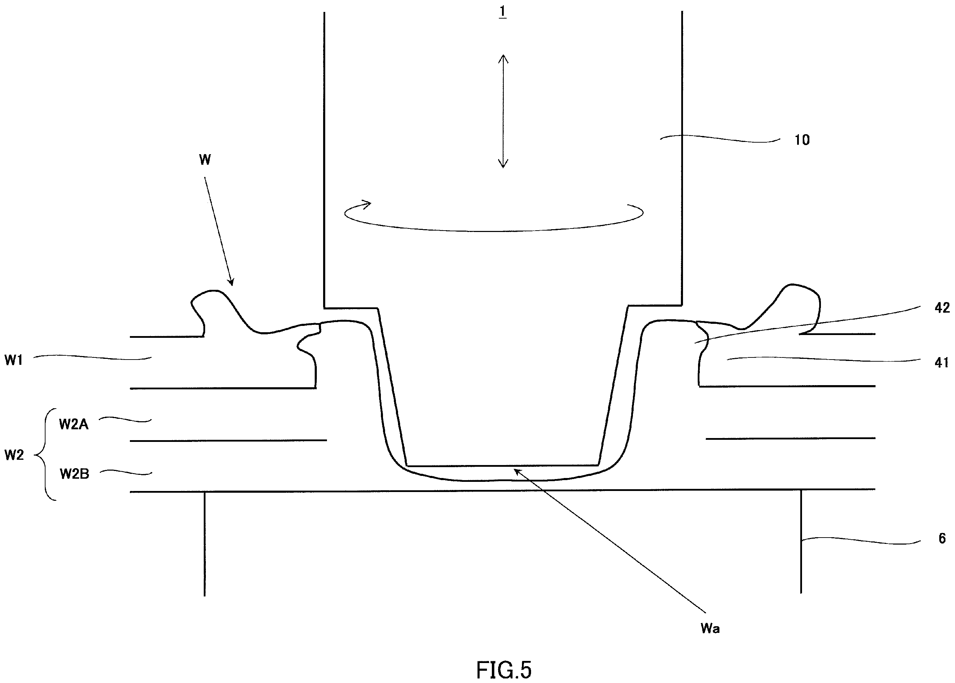

Below, the friction welding apparatus in Modification 2 is described with reference to Fig. 5.

Fig. 5 is a schematic view illustrating a substantial part of one example of the friction welding apparatus in Modification 2, and illustrates a state where the friction welding is performed.

As illustrated in Fig. 5, the friction welding apparatus 1 in Modification 2 has fundamentally the same configuration as the friction welding apparatus 1 according to Embodiment 1, but it differs in that the second member W2 is comprised of a plurality of second sub members W2A and W2B. In the plurality of second sub members, both the second sub members are made of a different type of material from the first member W1 and are made of steel.

For example, the second sub members W2A and W2B are made of steel, and the first member W1 may be made of aluminum. In this case, as illustrated in Fig. 5, the second sub members W2A and W2B are softened by the friction with the tip-end part of the tool 10, and the softened part is agitated and joined. Therefore, the part of the second sub members W2A and W2B which is softened, agitated, and joined (the second softened part 42) enters (sticks) into the first softened part 41.

The friction welding apparatus 1 in Modification 2 configured in this way also has similar operation and effects to the friction welding apparatus 1 according to Embodiment 1.

### (Example)

A friction welding apparatus, which is not according to the invention as defined in independent claims, is additionally provided with a storage device which stores first data indicative of a correlation between the temperature of the to-be-joined part, and the pressing force and the rotational speed of the tool to the friction welding apparatus according to Embodiment 1 (including Modifications 1 and 2).

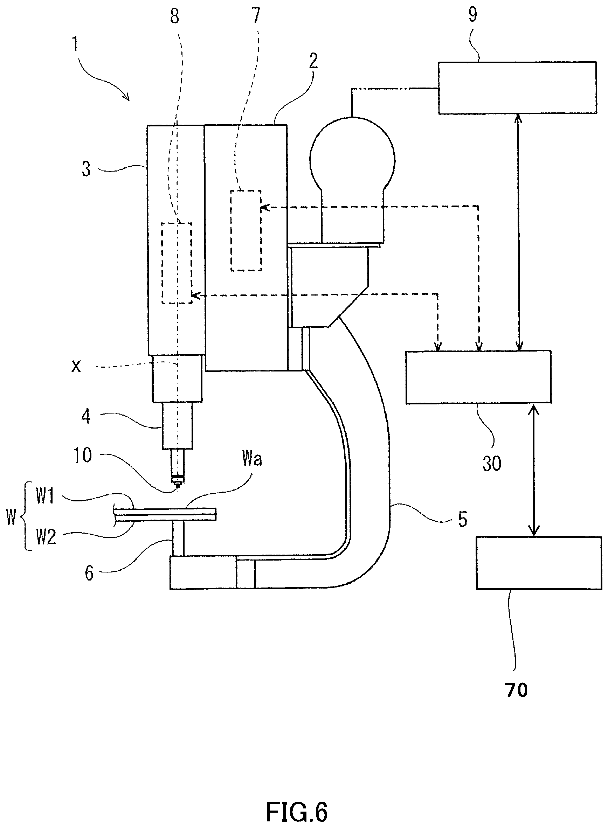

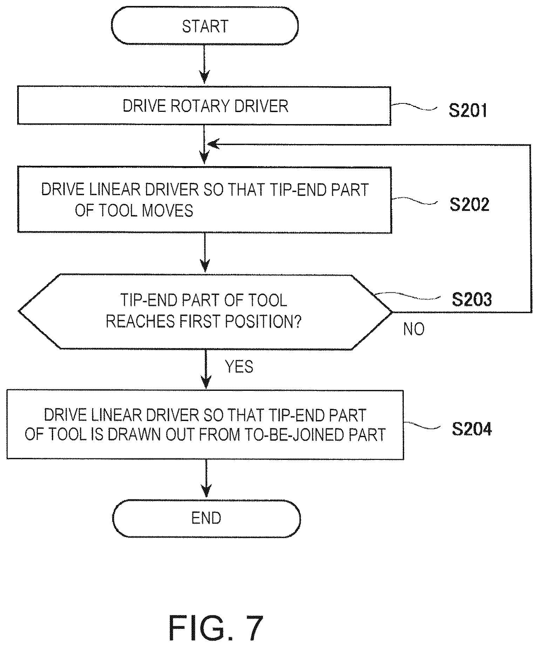

Below, one example of the friction welding apparatus not according to the invention is described with reference to Figs. 6 and 7.

### [Configuration of Friction Welding Apparatus]

Fig. 6 is a schematic view illustrating an outline configuration of the friction welding apparatus not according to the invention.

As illustrated in Fig. 6, the friction welding apparatus 1 not according to the invention has fundamentally the same configuration as the friction welding apparatus 1 according to Embodiment 1, but it differs in that it is provided with a storage device 70, instead of the temperature detector 60.

The storage device 70 stores the first data indicative of the correlation between the temperature of the to-be-joined part Wa, and the pressing force and the rotational speed of the tool 10. The first data may suitably be set beforehand by an experiment etc. In detail, for example, similar to the friction welding apparatus 1 according to Embodiment 1, the temperature of the to-be-joined part Wa is detected by the temperature detector 60, the pressing force and the rotational speed of the tool 10 (a driving amount of the linear driver 7 and a driving amount of the rotary driver 8) when the temperature is detected are acquired, and these information is stored as a database, to obtain the first data.

The storage device 70 may be comprised of a memory (not illustrated) which constitutes the control device 30, or may be comprised of various kinds of storage media, such as an external hard disk or a USB memory.

### [Operation of Friction Welding Apparatus (Method of Operating Friction Welding Apparatus)]

Next, operation of the friction welding apparatus 1 not according to the invention is described with reference to Figs. 6 and 7.

Fig. 7 is a flowchart illustrating one example of operation of the friction welding apparatus not according to the invention.

The operator first places the to-be-joined object W on the upper surface of the support 6. Next, the operator operates the input device (not illustrated) to input the joining execution of the to-be-joined object W into the control device 30.

Then, as illustrated in Fig. 7, the control device 30 drives the rotary driver 8 to rotate the tool holder 4 and the tool 10 at a given rotational speed (e.g., 500 to 3000rpm) (Step S201). Next, the control device 30 drives the linear driver 7 so that the tip-end part of the tool 10 moves, while rotating the tool holder 4 and the tool 10 (Step S202). At this time, the control device 30 controls the linear driver 7 so that the tool 10 is pressed against the to-be-joined object W with a given pressing force set beforehand (e.g., 4kN to 70kN). Note that the given rotational speed and the given pressing force are suitably set by the control device 30 reading the first data stored in the storage device 70.

Next, the control device 30 determines whether the tip-end part of the tool 10 reaches the first position (Step S203). Note that the positional information on the tip-end part of the tool 10 is detected by the position detector (not illustrated), and is outputted to the control device 30.

If the control device 30 determines that the tip-end part of the tool 10 does not reach the first position (No at Step S203), it then executes the processing at Steps S202 and S203 until the tip-end part of the tool 10 reaches the first position. On the other hand, if the control device 30 determines that the tip-end part of the tool 10 reaches the first position (Yes at Step S203), it then executes the processing at Step S204.

At Step S204, the control device 30 drives the linear driver 7 so that the tip-end part of the tool 10 is drawn out from the to-be-joined part Wa, while rotating the tool holder 4 and the tool 10. Then, when the tip-end part of the tool 10 is drawn out from the to-be-joined part Wa, the control device 30 suspends the rotary driver 8 so that the rotation of the tool holder 4 and the tool 10 is suspended, and ends this program. Note that, when joining the plurality of to-be-joined parts Wa, the control device 30 may start the joining of the next to-be-joined part Wa, without suspending the rotation of the tool holder 4 and the tool 10.

The friction welding apparatus 1 not according to the invention configured in this way also has similar operation and effects to the friction welding apparatus 1 according to Embodiment 1.

It is apparent for the person skilled in the art that many improvements or other embodiments of the present invention are possible from the above description. Therefore, the above description is to be interpreted only as illustration, and it is provided in order to teach the person skilled in the art the best mode that implements the present invention. The details of the configurations and/or the functions may be changed substantially, without departing from the scope of the appended claims.

### INDUSTRIAL APPLICABILITY

The friction welding apparatus and the method of operating the same of the present invention are useful because they can increase the joining strength even if the plurality of members made of different materials are joined using frictional heat.

### DESCRIPTION OF REFERENCE CHARACTERS

- 1: Friction Welding Apparatus
- 2: Base Body
- 3: Movable Body
- 4: Tool Holder
- 5: Curved Frame
- 6: Support

- 7: Linear Driver
- 8: Rotary Driver
- 9: Robotic Arm
- 10: Tool
- 30: Control Device
- 41: First Softened Part
- 42: Second Softened Part
- 60: Temperature Detector
- 70: Storage Device
- W: To-be-joined Object
- W1: First Member
- W1A: First Sub Member
- W1B: First Sub Member
- W2: Second Member
- W2A: Second Sub Member
- W2B: Second Sub Member
- Wa: To-be-joined Part
- X: Axis

## Claims

1. A friction welding apparatus (1) configured to join a to-be-joined object (W) having a first member (W1) and a second member (W2) by softening with frictional heat a part (Wa) of said to-be-joined object (W), the second member (W2) being made of steel and the first member (W1) being made of a different type of material from the second member (W2), and the first member being disposed opposing to a tool (10) of the apparatus (1) between the second member (W2) and said tool (10), said friction welding apparatus (1) comprising:
said tool (10) formed cylindrically, and rotatable about an axis (X) thereof and reciprocatable in a direction along the axis (X);
a rotary driver (8) configured to rotate the tool (10) about the axis (X);
a linear driver (7) configured to reciprocate the tool (10) along the axis (X); **characterized by** further comprising:
a temperature detector (60) configured to detect a temperature of said part (Wa) of the to-be-joined object (W); and
a control device (30) configured to:
- determine whether the temperature of said part (Wa) of the to-be-joined object (W) is at or above an A1 transformation point of the second member (W2) based on the temperature detected by the temperature detector (60),
- control the linear driver (7) and the rotary driver (8) so that:
(A) the tool (10) is rotated about the axis (X) while a tip-end part of the tool (10) is pressed against said part (Wa) of the to-be-joined object (W) to increase the temperature of said part (Wa) of the to-be-joined object (W) at or above the A1 transformation point;
(B) while the temperature of said part (Wa) of the to-be-joined object (W) is maintained at or above the A1 transformation point, the tip-end part of the tool (10) reaches a given first position set beforehand so that the softened second member (W2) sticks into the softened first member (W1), the first position being a position that is set within a range larger than 25% and less than 100% when a surface of the second member (W2) which contacts the first member (W1), is set as 0% and an opposite surface of the second member (W2) is set as 100%; and
(C) the tool (10) is drawn out from said part (Wa) of the to-be-joined object (W), while the temperature of said part (Wa) of the to-be-joined object (W) is maintained at or above the A1 transformation point and the tool (10) is rotated.

2. The friction welding apparatus of claim 1, wherein, during step (A), the control device (30) controls the linear driver (7) and the rotary driver (8) so that the temperature of said part (Wa) of the to-be-joined object (W) becomes at or above an A3 transformation point.

3. The friction welding apparatus of claim 1 or 2, wherein, during step (B), the control device (30) controls the linear driver (7) and the rotary driver (8) so that the temperature of said part (Wa) of the to-be-joined object (W) is maintained at or above an A3 transformation point.

4. The friction welding apparatus of any one of claims 1 to 3, wherein, during step (C), the control device (30) controls the linear driver (7) and the rotary driver (8) so that the temperature of said part (Wa) of the to-be-joined object (W) is maintained at or above an A3 transformation point.

5. The friction welding apparatus of any one of claims 1 to 4, further comprising a storage device (70) storing first data indicative of a correlation between the temperature of the said part (Wa) of the to-be-joined object (W), and a pressing force and a rotational speed of the tool (10).

6. The friction welding apparatus of any one of the preceding claims, further comprising a support (6) configured to support the to-be-joined object (W),
wherein the temperature detector (60) is disposed inside the support (6).

7. A method of operating the friction welding apparatus (1) of any one of the preceding claims, to join a to-be-joined object (W) having a first member (W1) and a second member (W2) by softening with frictional heat a part (Wa) of said to-be-joined object (W), the second member (W2) being made of steel and the first member (W 1) being made of a different type of material from the second member (W2) and the first member being disposed opposing to a tool (10) of the apparatus (1) between the second member (W2) and said tool (10),
**characterized in that** the method comprising the steps of controlling operation of the linear driver (7) and the rotary driver (8) with the control device (30) so that:
(A) the tool (10) is rotated about the axis (X) while the tip-end part of the tool (10) is pressed against said part of the to-be-joined object (W) to increase the temperature of said part (Wa) of the to-be-joined object (W) at or above an A1 transformation point; wherein the temperature detector (60) is used to detect a temperature of said part (Wa) of the to-be-joined object (W), and the control device (30) determines whether the temperature of said part (Wa) of the to-be-joined object (W) is at or above said A1 transformation point based on said detected temperature;
(B) while the temperature of said part (Wa) of the to-be-joined object (W) is maintained at or above the A1 transformation point, the tip-end part of the tool (10) reaches the first position set beforehand so that the softened second member (W2) sticks into the softened first member (W1), the first position being a position that is set within a range larger than 25% and less than 100% when a surface of the second member (W2) which contacts the first member (W1), is set as 0% and an opposite surface of the second member (W2) is set as 100%; and
(C) the tool (10) is drawn out from said part (Wa) of the to-be-joined object (W), while the temperature of said part (Wa) of the to-be-joined object (W) is maintained at or above the A1 transformation point and the tool (10) is rotated.

8. The method of claim 7, wherein, during step (A), the linear driver (7) and the rotary driver (8) are operated so that the temperature of said part (Wa) of the to-be-joined object (W) becomes at or above an A3 transformation point.

9. The method of claim 7 or 8, wherein, during step (B), the linear driver (7) and the rotary driver (8) are operated so that the temperature of said part (Wa) of the to-be-joined object (W) becomes at or above an A3 transformation point.

10. The method of any one of claims 7 to 9, wherein, during step (C), the linear driver (7) and the rotary driver (8) are operated so that the temperature of said part (Wa) of the to-be-joined object (W) becomes at or above an A3 transformation point.

11. The method of any one of claims 7 to 10, wherein the first member (W1) is made of at least one of materials including aluminum, thermoplastic resin, and fiber-reinforced plastic.

12. The method of any one of claims 7 to 11, wherein the first member (W1) is comprised of a plurality of first sub members (W1A, W1B).

13. The method of any one of claims 7 to 12, wherein the second member (W2) is comprised of a plurality of second sub members (W2A, W2B).

14. The method of any one of claims 7 to 13, wherein the friction welding apparatus (1) further comprises a storage device (70) storing first data indicative of a correlation between the temperature of said part (Wa) of the to-be-joined object (W), and a pressing force of the linear driver (7) and a rotational speed of the rotary driver (8), and
wherein, during steps (A) to (C), the linear driver (7) and the rotary driver (8) are operated based on the first data.

## Patentansprüche

1. Reibschweißvorrichtung (1), die konfiguriert ist, um ein zu verbindendes Objekt (W) mit einem ersten Element (W1) und einem zweiten Element (W2) durch Aufweichen mit Reibungswärme eines Teils (Wa) des zu verbindenden Objekts (W) zu verbinden, wobei das zweite Element (W2) aus Stahl hergestellt ist und das erste Element (W1) aus einem anderen Typ von Material als das zweite Element (W2) hergestellt ist, und wobei das erste Element gegenüber einem Werkzeug (10) der Vorrichtung (1) zwischen dem zweiten Element (W2) und dem Werkzeug (10) angeordnet ist, wobei die Reibschweißvorrichtung (1) aufweist:
das Werkzeug (10), das zylinderförmig ausgebildet ist und um eine Achse (X) davon drehbar ist und in einer Richtung entlang der Achse (X) hin- und her bewegbar ist;
einen Drehantrieb (8), der konfiguriert ist, um das Werkzeug (10) um die Achse (X) zu drehen;
einen Linearantrieb (7), der konfiguriert ist, um das Werkzeug (10) entlang der Achse (X) hin- und her zu bewegen;
**dadurch gekennzeichnet, dass** sie ferner aufweist:
einen Temperaturdetektor (60), der konfiguriert ist, um eine Temperatur des Teils (Wa) des zu verbindenden Objekts (W) zu erfassen; und
eine Steuervorrichtung (30), die konfiguriert ist, um:
- basierend auf der von dem Temperaturdetektor (60) erfassten Temperatur zu bestimmen, ob die Temperatur des Teils (Wa) des zu verbindenden Objekts (W) auf oder über einem A1-Transformationspunkt des zweiten Elements (W2) liegt,
- den Linearantrieb (7) und den Drehantrieb (8) derart zu steuern, dass:
(A) das Werkzeug (10) um die Achse (X) gedreht wird, während ein Spitzenendteil des Werkzeugs (10) gegen den Teil (Wa) des zu verbindenden Objekts (W) gedrückt wird, um die Temperatur des Teils (Wa) des zu verbindenden Objekts (W) auf oder über den A1-Transformationspunkt zu erhöhen;
(B) während die Temperatur des Teils (Wa) des zu verbindenden Objekts (W) auf oder über dem A1-Transformationspunkt gehalten wird, der Spitzenendteil des Werkzeugs (10) eine erste gegebene Position erreicht, die vorab festgelegt wird, so dass das aufgeweichte zweite Element (W2) in das aufgeweichte erste Element (W1) eindringt, wobei die erste Position eine Position ist, die innerhalb eines Bereichs von mehr als 25 % und weniger als 100 % festgelegt wird, wenn eine Oberfläche des zweiten Elements (W2), welche das erste Element (W1) berührt, als 0 % festgelegt wird und eine gegenüberliegende Oberfläche des zweiten Elements (W2) als 100 % festgelegt wird; und
(C) das Werkzeug (10) aus dem Teil (Wa) des zu verbindenden Objekts (W) heraus gezogen wird, während die Temperatur des Teils (Wa) des zu verbindenden Objekts (W) auf oder über dem A1-Transformationspunkt gehalten wird und das Werkzeug (10) gedreht wird.

2. Reibschweißvorrichtung nach Anspruch 1, wobei, während Schritt (A), die Steuervorrichtung (30) den Linearantrieb (7) und den Drehantrieb (8) so steuert, dass die Temperatur des Teils (Wa) des zu verbindenden Objekts (W) auf oder über einem A3-Transformationspunkt liegt.

3. Reibschweißvorrichtung nach Anspruch 1 oder 2, wobei, während Schritt (B), die Steuervorrichtung (30) den Linearantrieb (7) und den Drehantrieb (8) so steuert, dass die Temperatur des Teils (Wa) des zu verbindenden Objekts (W) auf oder über einem A3-Transformationspunkt gehalten wird.

4. Reibschweißvorrichtung nach einem der Ansprüche 1 bis 3, wobei, während Schritt (C), die Steuervorrichtung (30) den Linearantrieb (7) und den Drehantrieb (8) so steuert, dass die Temperatur des Teils (Wa) des zu verbindenden Objekts (W) auf oder über einem A3-Transformationspunkt gehalten wird.

5. Reibschweißvorrichtung nach einem der Ansprüche 1 bis 4, ferner umfassend eine Speichervorrichtung (70), die erste Daten speichert, die eine Korrelation zwischen der Temperatur des Teils (Wa) des zu verbindenden Objekts (W) und einer Druckkraft und einer Drehzahl des Werkzeugs (10) angeben.

6. Reibschweißvorrichtung nach einem der vorstehenden Ansprüche, ferner umfassend eine Halterung (6), die konfiguriert ist, um das zu verbindende Objekt (W) zu stützen,
wobei der Temperaturdetektor (60) innerhalb der Halterung (6) angeordnet ist.

7. Verfahren zum Bedienen der Reibschweißvorrichtung (1) nach einem der vorstehenden Ansprüche, um ein zu verbindendes Objekt (W) mit einem ersten Element (W1) und einem zweiten Element (W2) durch Aufweichen mit Reibungswärme eines Teils (Wa) des zu verbindenden Objekts (W) zu verbinden, wobei das zweite Element (W2) aus Stahl hergestellt ist und das erste Element (W1) aus einem anderen Typ von Material als das zweite Element (W2) hergestellt ist, und das erste Element gegenüber einem Werkzeug (10) der Vorrichtung (1) zwischen dem zweiten Element (W2) und dem Werkzeug (10) angeordnet ist,
**dadurch gekennzeichnet, dass** das Verfahren die Schritte des Steuerns des Betriebs des Linearantriebs (7) und des Drehantriebs (8) mit der Steuervorrichtung (30) umfasst, so dass:
(A) das Werkzeug (10) um die Achse (X) gedreht wird, während der Spitzenendteil des Werkzeugs (10) gegen den Teil des zu verbindenden Objekts (W) gedrückt wird, um die Temperatur des Teils (Wa) des zu verbindenden Objekts (W) auf oder über einen A1-Transformationspunkt zu erhöhen; wobei der Temperaturdetektor (60) verwendet wird, um eine Temperatur des Teils (Wa) des zu verbindenden Objekts (W) zu erfassen, und die Steuervorrichtung (30) basierend auf der erfassten Temperatur bestimmt, ob die Temperatur des Teils (Wa) des zu verbindenden Objekts (W) auf oder über dem A1-Transformationspunkt liegt;
(B) während die Temperatur des Teils (Wa) des zu verbindenden Objekts (W) auf oder über dem A1-Transformationspunkt gehalten wird, der Spitzenendteil des Werkzeugs (10) die erste Position erreicht, die vorab festgelegt wird, so dass das aufgeweichte zweite Element (W2) in das aufgeweichte erste Element (W1) eindringt, wobei die erste Position eine Position ist, die innerhalb eines Bereichs von mehr als 25 % und weniger als 100 % festgelegt wird, wenn eine Oberfläche des zweiten Elements (W2), welche das erste Element (W1) berührt, als 0 % festgelegt wird und eine gegenüberliegende Oberfläche des zweiten Elements (W2) als 100 % festgelegt wird; und
(C) das Werkzeug (10) aus dem Teil (Wa) des zu verbindenden Objekts (W) heraus gezogen wird, während die Temperatur des Teils (Wa) des zu verbindenden Objekts (W) auf oder über dem A1-Transformationspunkt gehalten wird und das Werkzeug (10) gedreht wird.

8. Verfahren nach Anspruch 7, wobei, während Schritt (A), der Linearantrieb (7) und der Drehantrieb (8) so bedient werden, dass die Temperatur des Teils (Wa) des zu verbindenden Objekts (W) auf oder über einem A3-Transformationspunkt liegt.

9. Verfahren nach Anspruch 7 oder 8, wobei, während Schritt (B), der Linearantrieb (7) und der Drehantrieb (8) so bedient werden, dass die Temperatur des Teils (Wa) des zu verbindenden Objekts (W) auf oder über einem A3-Transformationspunkt liegt.

10. Verfahren nach einem der Ansprüche 7 bis 9, wobei, während Schritt (C), der Linearantrieb (7) und der Drehantrieb (8) so bedient werden, dass die Temperatur des Teils (Wa) des zu verbindenden Objekts (W) auf oder über einem A3-Transformationspunkt liegt.

11. Verfahren nach einem der Ansprüche 7 bis 10, wobei das erste Element (W1) aus zumindest einem von Materialien hergestellt ist, die Aluminium, thermoplastisches Harz und faserverstärkten Kunststoff beinhalten.

12. Verfahren nach einem der Ansprüche 7 bis 11, wobei das erste Element (W1) aus einer Vielzahl von ersten Teilelementen (W1A, W1B) gebildet ist.

13. Verfahren nach einem der Ansprüche 7 bis 12, wobei das zweite Element (W2) aus einer Vielzahl von zweiten Teilelementen (W2A, W2B) gebildet ist.

14. Verfahren nach einem der Ansprüche 7 bis 13, wobei die Reibschweißvorrichtung (1) ferner eine Speichervorrichtung (70) aufweist, die erste Daten speichert, die eine Korrelation zwischen der Temperatur des Teils (Wa) des zu verbindenden Objekts (W) und einer Druckkraft des Linearantriebs (7) und einer Drehzahl des Drehantriebs (8) angeben, und
wobei, während den Schritten (A) bis (C), der Linearantrieb (7) und der Drehantrieb (8) basierend auf den ersten Daten bedient werden.

## Revendications

1. Appareil de soudage par friction (1) configuré pour assembler un objet à assembler (W) présentant un premier élément (W1) et un deuxième élément (W2) en ramollissant avec de la chaleur de friction une partie (Wa) dudit objet à assembler (W), le deuxième élément (W2) étant composé d'acier et le premier élément (W1) étant composé d'un type de matériau différent de celui du deuxième élément (W2), et le premier élément étant disposé à l'opposé d'un outil (10) de l'appareil (1) entre le deuxième élément (W2) et ledit outil (10), ledit appareil de soudage par friction (1) comprenant :
ledit outil (10) formé de manière cylindrique, et pouvant tourner autour d'un axe (X) de celui-ci et pouvant effectuer un mouvement de va-et-vient dans une direction le long de l'axe (X) ;
un système d'entraînement rotatif (8) configuré pour faire tourner l'outil (10) autour de l'axe (X) ;
un système d'entraînement linéaire (7) configuré pour déplacer l'outil (10) en va-et-vient le long de l'axe (X) ; **caractérisé en ce qu'**il comprend en outre :
un capteur de température (60) configuré pour détecter une température de ladite partie (Wa) de l'objet à assembler (W) ; et
un dispositif de commande (30) configuré pour :
- déterminer si la température de ladite partie (Wa) de l'objet à assembler (W) se situe sur un point de transformation A1 du deuxième élément (W2) ou au-dessus de celui-ci sur la base de la température détectée par le capteur de température (60),
- commander le système d'entraînement linéaire (7) et le système d'entraînement rotatif (8) de telle sorte que :
(A) l'outil (10) est mis en rotation autour de l'axe (X) tandis qu'une partie d'extrémité de pointe de l'outil (10) est pressée contre ladite partie (Wa) de l'objet à assembler (W) pour augmenter la température de ladite partie (Wa) de l'objet à assembler (W) sur ou au-dessus du point de transformation A1 ;
(B) alors que la température de la partie (Wa) de l'objet à assembler (W) est maintenue sur ou au-dessus du point de transformation A1, la partie d'extrémité de pointe de l'outil (10) atteint une première position donnée réglée au préalable de telle sorte que le deuxième élément (W2) ramolli colle dans le premier élément (W1) ramolli, la première position étant une position qui est définie dans une plage supérieure à 25 % et inférieure à 100 % lorsqu'une surface du deuxième élément (W2) qui est en contact avec le premier élément (W1) est définie comme étant de 0 % et une surface opposée du deuxième élément (W2) est définie comme étant de 100 % ; et
(C) l'outil (10) est extrait de ladite partie (Wa) de l'objet à assembler (W), tandis que la température de ladite partie (Wa) de l'objet à assembler (W) est maintenue sur ou au-dessus du point de transformation A1 et l'outil (10) est mis en rotation.

2. Appareil de soudage par friction selon la revendication 1, dans lequel, pendant l'étape (A), le dispositif de commande (30) commande le système d'entraînement linéaire (7) et le système d'entraînement rotatif (8) de telle sorte que la température de ladite partie (Wa) de l'objet à assembler (W) devient égale ou supérieure à un point de transformation A3.

3. Appareil de soudage par friction selon la revendication 1 ou 2, dans lequel, pendant l'étape (B), le dispositif de commande (30) commande le système d'entraînement linéaire (7) et le système d'entraînement rotatif (8) de telle sorte que la température de la partie (Wa) de l'objet à assembler (W) est maintenue sur ou au-dessus d'un point de transformation A3.

4. Appareil de soudage par friction selon l'une quelconque des revendications 1 à 3, dans lequel, pendant l'étape (C), le dispositif de commande (30) commande le système d'entraînement linéaire (7) et le système d'entraînement rotatif (8) de telle sorte que la température de la partie (Wa) de l'objet à assembler (W) est maintenue sur ou au-dessus d'un point de transformation A3.

5. Appareil de soudage par friction selon l'une quelconque des revendications 1 à 4, comprenant en outre un dispositif de stockage (70) stockant des premières données indiquant une corrélation entre la température de ladite partie (Wa) de l'objet à assembler (W) et une force de pression et une vitesse de rotation de l'outil (10).

6. Appareil de soudage par friction selon l'une quelconque des revendications précédentes, comprenant en outre un support (6) configuré pour supporter l'objet à assembler (W),
dans lequel le détecteur de température (60) est disposé à l'intérieur du support (6).

7. Procédé destiné à faire fonctionner l'appareil de soudage par friction (1) selon l'une quelconque des revendications précédentes, pour assembler l'objet à assembler (W) présentant un premier élément (W1) et un deuxième élément (W2) en ramollissant avec de la chaleur de friction une partie (Wa) dudit objet à assembler (W), le deuxième élément (W2) étant composé d'acier et le premier élément (W1) étant composé d'un type de matériau différent de celui du deuxième élément (W2) et le premier élément étant disposé à l'opposé d'un outil (10) de l'appareil (1) entre le deuxième élément (W2) et ledit outil (10),
**caractérisé en ce que** le procédé comprend les étapes de commande du fonctionnement du système d'entraînement linéaire (7) et du système d' entraînement rotatif (8) avec le dispositif de commande (30) de telle sorte que :
(A) l'outil (10) est mis en rotation autour de l'axe (X) tandis que la partie d'extrémité de pointe de l'outil (10) est pressée contre ladite partie de l'objet à assembler (W) pour augmenter la température de ladite partie (Wa) de l'objet à assembler (W) sur ou au-dessus du point de transformation A1 ; dans lequel le capteur de température (60) est utilisé pour détecter une température de ladite partie (Wa) de l'objet à assembler (W), et le dispositif de commande (30) détermine si la température de ladite partie (Wa) de l'objet à assembler (W) est égale ou supérieure audit point de transformation A1 sur la base de ladite température détectée ;
(B) alors que la température de ladite partie (Wa) de l'objet à assembler (W) est maintenue sur ou au-dessus du point de transformation A1, la partie d'extrémité de pointe de l'outil (10) atteint une première position donnée réglée au préalable de telle sorte que le deuxième élément (W2) ramolli colle dans le premier élément (W1) ramolli, la première position étant une position qui est définie dans une plage supérieure à 25 % et inférieure à 100 % lorsqu'une surface du deuxième élément (W2) qui est en contact avec le premier élément (W1) est définie comme étant de 0 % et une surface opposée du deuxième élément (W2) est définie comme étant de 100 % ; et
(C) l'outil (10) est extrait de ladite partie (Wa) de l'objet à assembler (W), tandis que la température de ladite partie (Wa) de l'objet à assembler (W) est maintenue sur ou au-dessus du point de transformation A1 et l'outil (10) est mis en rotation.

8. Procédé selon la revendication 7, dans lequel, pendant l'étape (A), le système d'entraînement linéaire (7) et le système d'entraînement rotatif (8) fonctionnent de telle manière que la température de ladite partie (Wa) de l'objet à assembler (W) devient égale ou supérieure à un point de transformation A3.

9. Procédé selon la revendication 7 ou 8, dans lequel, pendant l'étape (B), le système d' entraînement linéaire (7) et le système d'entraînement rotatif (8) fonctionnent de telle sorte que la température de ladite partie (Wa) de l'objet à assembler (W) devient égale ou supérieure à un point de transformation A3.

10. Procédé selon l'une quelconque des revendications 7 à 9, dans lequel, pendant l'étape (C), le système d'entraînement linéaire (7) et le système d'entraînement rotatif (8) fonctionnent de telle sorte que la température de ladite partie (Wa) de l'objet à assembler (W) devient égale ou supérieure à un point de transformation A3.

11. Procédé selon l'une quelconque des revendications 7 à 10, dans lequel le premier élément (W1) est composé d'au moins un de matériaux comprenant l'aluminium, la résine thermoplastique et le plastique renforcé par des fibres.

12. Procédé selon l'une quelconque des revendications 7 à 11, dans lequel le premier élément (W1) se compose d'une pluralité de premiers sous-éléments (W1A, W1B).

13. Procédé selon l'une quelconque des revendications 7 à 12, dans lequel le deuxième élément (W2) se compose d'une pluralité de deuxièmes sous-éléments (W2A, W2B).

14. Procédé selon l'une quelconque des revendications 7 à 13, dans lequel l'appareil de soudage par friction (1) comprend en outre un dispositif de stockage (70) stockant des premières données indiquant une corrélation entre la température de ladite partie (Wa) de l'objet à assembler (W), et une force de pression du système d'entraînement linéaire (7) et une vitesse de rotation du système d'entraînement rotatif (8), et
dans lequel, pendant les étapes (A) à (C), le système d'entraînement linéaire (7) et le système d'entraînement rotatif (8) fonctionnent sur la base des premières données.
